# EUROPÄISCHE PATENTSCHRIFT

(11) **EP 0 662 922 B1**
(45) Veröffentlichungstag und Bekanntmachung des Hinweises auf die Patenterteilung: **27.03.1996**
(21) Anmeldenummer: 93921802.0
(22) Anmeldetag: 01.10.1993
(51) Int. Cl.: B65G 1/04

(54) **VORRICHTUNG ZUM EIN- UND AUSLAGERN VON LASTTRÄGERN IN EIN REGAL BZW. AUS EINEM REGAL**
APPARATUS FOR LOADING AND UNLOADING LOAD-BEARING ELEMENTS ONTO AND OFF SHELVING
DISPOSITIF PERMETTANT D'INSERER DES PORTE-CHARGES DANS DES RAYONNAGES ET DE LES EN SORTIR

(30) Priorität: 02.10.1992 DE 4233690
(43) Veröffentlichungstag der Anmeldung: 19.07.1995
(73) Patentinhaber: Bellheimer Metallwerk GmbH, D-76752 Bellheim (DE)
(72) Erfinder: BOUCHE, Norbert, D-76773 Kuhardt (DE)
(74) Vertreter: Böning, Manfred, Dr.-Ing.
(86) Internationale Anmeldenummer: DE9300951
(87) Internationale Veröffentlichungsnummer: WO9407775

(56) Entgegenhaltungen:
- WO-A-81/03653
- DE-A- 3 624 033
- DE-U- 9 213 479

## Beschreibung

Die Erfindung betrifft ein Lagersystem mit Lastträgern und einer Vorrichtung zum Ein- und Auslagern der Lastträger in ein Regal bzw. aus einem Regal, bei der die Lastträger an ihren sich gegenüberliegenden Enden mit Widerlagern für Mitnehmer versehen sind und bei der zum Ein- und Auslagern der Lastträger durch umlaufende Antriebsstränge angetriebene, in Antriebsstrangrichtung zueinander versetzt angeordnete Mitnehmer dienen, die zwecks Mitnahme der Lastträger unter ruckfreier Zwangsführung mit sich gegenüberliegenden Wänden der Widerlager zusammenwirken.

Eine Vorrichtung der vorstehenden Art ist aus der EP-A-461 735 bekannt. Bei der bekannten Vorrichtung dienen zum Antrieb von jeweils zwei, einen kreisförmigen Querschnitt aufweisenden Mitnehmern Antriebsstränge, die jeweils vier Umlenkräder mit vertikalen Achsen passieren. Durch die Verwendung von jeweils vier Umlenkrädern läßt sich zwischen jeweils zwei einem Lastträger zugewandten Rädern ein gerader, parallel zur Vorderkante des Lastträgers verlaufender Strangabschnitt schaffen, der einen geradlinigen Einlauf jeweils eines vertikal angeordneten Mitnehmers in einen am Lastträger vorgesehenen Führungsschlitz erlaubt, dessen Breite gleich dem Durchmesser der Mitnehmer ist, so daß eine ruckfreie Zwangsführung der Lastträger gewährleisten ist. Da zur Führung der Antriebsstränge jeweils vier Räder benötigt werden, ist nicht nur der Herstellungsaufwand für die bekannte Konstruktion vergleichsweise groß, sondern auch der Platzbedarf für die Antriebsstränge und die Räder.

Bei einer anderen aus der US-PS 4 756 657 bekannten Vorrichtung zum Ein- und Auslagern von Lastträgern in bzw. aus einem Regal passieren die Antriebsstränge lediglich zwei Umlenkräder. Auch hier sind die Mitnehmer zylindrisch ausgebildet. Der Nachteil dieser Vorrichtung besteht darin, daß die Lastträger beim Einlagern in das Regal am Ende des Einlagerungsvorganges nicht zwangsweise über eine vorgegebene Wegstrecke durch die Mitnehmer abgebremst werden, sondern im von den Mitnehmern freigegebenen Zustand mehr oder weniger lange bzw. kurze Wegstrecken zurücklegen, bis sie zur Ruhe kommen. Die Folge ist, daß ihre Endposition nicht genau definiert ist, es sei denn, daß man mit eine Endposition festlegenden Anschlägen arbeitet. Letzteres aber bedeutet nicht mehr und nicht weniger, als daß die Geschwindigkeit schlagartig auf Null reduziert wird.

Der Erfindung liegt die Aufgabe zugrunde, ein Lagersystem der in Betracht gezogenen Gattung zu schaffen, bei dem auch dann eine Zwangsführung der Lastträger möglich ist, wenn die Antriebsstränge für die Mitnehmer nicht mehr Umlenkräder passieren wie im Falle der zweiten bekannten Vorrichtung. Diese Aufgabe wird erfindungsgemäß dadurch gelöst, daß die Mitnehmer an jeweils zwei im Abstand voneinander angeordneten Punkten mit den Antriebssträngen verbunden sind und daß die ruckfreie Zwangsführung der Lastträger in ihre jeweilige Endposition durch ein Nockenprofil der Mitnehmer gesichert wird, wobei die Antriebsstränge an den sich gegenüberliegenden Enden der Vorrichtung nur jeweils ein Umlenkrad passieren.

Das erfindungsgemäße Lagersystem bietet den Vorteil, daß bei ihm die Lastträger in die Fächer eines Regales ruckfrei in ihre genaue Endposition überführt und beim Auslagern ruckfrei beschleunigt werden, ohne daß es einer aufwendigen und sperrigen Führung der Antriebsstränge bedarf.

Die Erfindung wird im folgenden anhand der beigefügten Schemazeichnung näher erläutert.

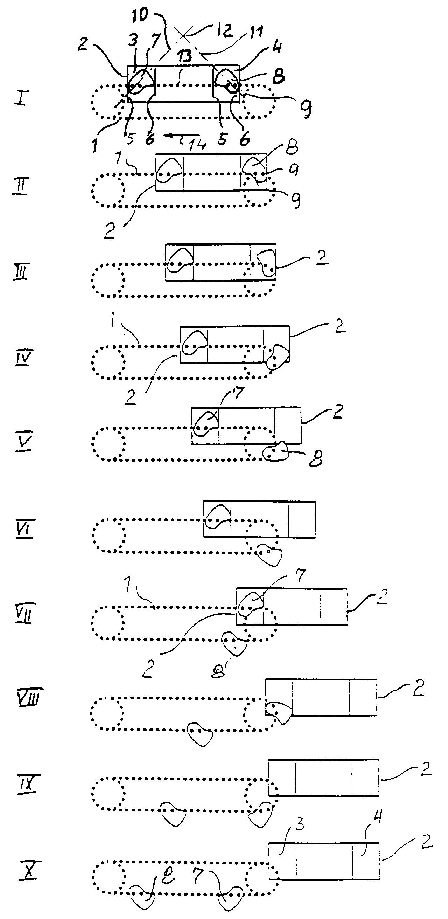

In der einzigen Figur ist 1 einer von zwei im Abstand voneinander angeordneten Antriebssträngen einer vor einem senkrecht zur Zeichnungsebene angeordneten Regal auf- und abbewegbaren Vorrichtung zum Hin- und Herverschieben von Lastträgern 2. Jeder Lastträger 2 weist an seinen Enden von Aufnahmen 3 und 4 mit sich jeweils gegenüberliegenden Wänden 5 und 6 gebildete Widerlager auf, in die während des Transportes der Lastträger 2 Mitnehmer 7 und 8 mit einem nockenförmigen Profil greifen. Die Mitnehmer 7 und 8 sind an jeweils zwei unmittelbar aufeinanderfolgenden Kettenbolzen 9 des ihnen jeweils zugeordneten, von einer Kette gebildeten Antriebsstranges 1 befestigt. Es versteht sich, daß die Vorrichtung zusätzlich mit Stützschienen für den jeweiligen Lastträger und mit Mitteln zu ihrer Führung und ihrem Antrieb versehen ist. Da diese Mittel indes nichts mit dem Kern der Erfindung zu tun haben und darüber hinaus bekannt sind, wurde auf ihre Darstellung verzichtet.

In der Zeichnung sind 10 Positionen I bis X des Antriebsstranges 1 und der mit ihnen verbundenen Mitnehmer 7 und 8 dargestellt. In der Position I liegen die Mitnehmer 7 und 8 gegen die jeweils äußeren Wände 5 bzw. 6 der Aufnahmen 3 und 4 an und arretieren die Lastträger 2 auf diese Weise in einer bestimmten Lage. Eine derartige Arretierung ließe sich auch mit zylindrischen Mitnehmern realisieren, allerdings müßte der Durchmessser derartiger Mitnehmer kleiner sein als der Abstand zwischen den sich gegenüberliegenden Wänden 5 und 6 der Aufnahmen 3 und 4, was wiederum ein gesteuertes Abbremsen und lagegenaues Positionieren des Lastträgers 2 beim Einlagern unmöglich machen würde. Wie man anhand der Position I erkennen kann, sind die Mitnehmer 7 und 8 dergestalt mit dem Antriebsstrang 1 verbunden, daß ihre Längsachsen 10 und 11 sich bei auf der Vorrichtung arretiertem Lastträger im Scheitelpunkt 12 eines gleichschenkligen Dreickes schneiden, dessen Grundlinie vom Teil 13 des Antriebsstranges gebildet wird, der zwischen den Mitnehmern 7 und 8 angeordnet ist.

Beim Einlagern des jeweiligen Lastträgers 2 in das Regal wird in dem Antriebsstrang 1 eine Bewegung in Richtung des Pfeiles 14 eingeleitet und der Lastträger 2 aus seiner Ausgangsposition nach rechts verschoben. Die Positionen II bis VII zeigen unterschiedliche Einschubphasen. Beim Übergang zwischen den Positionen VII und VIII erfolgt das gesteuerte Abbremsen des Lastträgers 2, der in der Position VIII bereits seine genaue Endposition erreicht hat, und dies ohne störende Stoßbelastungen sowohl des Regales als auch des Lastträgers. Die Endposition des Antriebsstranges 1 und der Mitnehmer 7 und 8 ist dagegen in der Position X dargestellt. Die Mitnehmer 7,8 können aus der Endposition entweder in die Position I zurückgeführt werden oder aber zunächst in der Endposition verharren, um anschließend einen Lastträger aus einem anderen Fach des Regales auszulagern, indem in den Antriebsstrang 1 eine gegenläufige Bewegung zum Pfeil 14 eingeleitet wird.

## Patentansprüche

1. Lagersystem mit Lastträgern und einer Vorrichtung zum Ein- und Auslagern der Lastträger in ein Regal bzw. aus einem Regal, bei der die Lastträger an ihren sich gegenüberliegenden Enden mit Widerlagern für Mitnehmer versehen sind und bei der zum Ein- und Auslagern der Lastträger durch umlaufende Antriebsstränge angetriebene, in Antriebsstrangrichtung zueinander versetzt angeordnete Mitnehmer dienen, die zwecks Mitnahme der Lastträger unter ruckfreier Zwangsführung mit sich gegenüberliegenden Wänden der Widerlager zusammenwirken, **dadurch gekennzeichnet**, daß die Mitnehmer (7,8) an jeweils zwei im Abstand voneinander angeordneten Punkten mit den Antriebssträngen (1) verbunden sind und daß die ruckfreie Zwangsführung der Lastträger (2) in ihre jeweilige Endposition durch ein Nockenprofil der Mitnehmer (7,8) gesichert wird, wobei die Antriebsstränge (1) an den sich gegenüberliegenden Enden der Vorrichtung nur jeweils ein Umlenkrad passieren.

2. Vorrichtung nach Anspruch 1, **dadurch gekennzeichnet**, daß die Längsachsen (10,11) der Mitnehmer (7,8) bei aus einem Regal ausgelagertem Lastträger (2) die Schenkel eines gleichschenkligen Dreieckes mit dem die Mitnehmer (7,8) miteinander verbindenden Teil (13) des Antriebsstranges (1) als Grundlinie bilden.

3. Vorrichtung nach Anspruch 1 oder 2, **dadurch gekennzeichnet**, daß die Antriebsstränge (1) von Laschenketten gebildet werden und die Mitnehmer (7,8) an den den Lastträgern (2) zugewandten Seiten, der Laschenketten mit jeweils zwei unmittelbar aufeinander folgenden Kettenbolzen (9) der Laschenketten verbunden sind.

## Claims

1. A storage system having load-bearing elements and an apparatus for loading and unloading load-bearing elements onto and off shelving, in which the load-bearing elements are provided at their mutually opposing ends with abutments for carriers and in which the loading and unloading of the load-bearing elements is served by carriers driven by rotating drive strands and disposed in mutually offset arrangement in the drive strand direction, which carriers, under jolt-free forced guidance, interact with mutually opposing walls of the abutments for the purpose of transporting the load-bearing elements, wherein the carriers (7, 8) are connected at two respective, mutually spaced points to the drive strands (1), and wherein the jolt-free forced guidance of the load-bearing elements (2) into their respective end position is secured by a cam profile of the carriers (7, 8), the drive strands (1) passing, at the mutually opposing ends of the apparatus, only one respective deflection pulley.

2. The apparatus as claimed in claim 1, wherein the longitudinal axes (10, 11) of the carriers (7, 8), when a load-bearing element (2) is unloaded off shelving, form the sides of an isosceles triangle having as its base line that part (13) of the drive strand (1) which interconnects the carriers (7, 8).

3. The apparatus as claimed in claim 1 or 2, wherein the drive strands (1) are formed by plate link chains and the carriers (7, 8) are connected, on those sides of the plate link chains facing the load-bearing elements (2), to two respective, immediately consecutive chain pins (9) of the plate link chains.

## Revendications

1. Système de stockage comportant des porte-charges et un dispositif pour introduire et ressortir les porte-charges dans ou hors d'un rayonnage, et dans lequel les porte-charges comportent, au niveau de leurs extrémités opposées, des butées pour des organes d'entraînement, et dans lequel pour introduire et ressortir des porte-charges, on utilise des organes d'entraînement, qui sont entraînés par des éléments d'entraînement sans fin et sont décalés les uns par rapport aux autres dans la direction des éléments d'entraînement sans fin et qui coopèrent pour un entraînement des porte-charges selon un guidage forcé sans à-coup, avec des parois opposées des butées, caractérisé en ce que les organes d'entraînement (7,8) sont reliés aux éléments d'entraînement sans fin (1), en respectivement deux points distants l'un de l'autre et que le guidage forcé sans à-coup des porte-charges (2) est assuré, dans la position finale respective des porte-charges, par un profil de came des organes d'entraînement (7,8), les éléments d'entraînement sans fin (1) circulant au niveau de chaque extrémité opposée du dispositif, seulement sur une roue de renvoi respective.

2. Dispositif selon la revendication 1, caractérisé en ce que, dans le cas d'un porte-charge (2) ressorti d'un rayonnage, les axes longitudinaux (10,11) des organes d'entraînement (7,8) forment les branches d'un triangle isocèle, dont la base est formée par la partie (13), qui relie entre eux les organes d'entraînement (7,8), de l'élément d'entraînement sans fin (1).

3. Dispositif selon la revendication 1 ou 2, caractérisé en ce que les éléments d'entraînement sans fin (1) sont formées par des chaînes articulées et que les organes d'entraînement (7,8) sont reliés aux côtés, qui sont tournés vers les porte-charges (2), des chaînes articulées à respectivement deux tourillons (9), qui se succèdent directement, des chaînes articulées.
